# EUROPÄISCHE PATENTSCHRIFT

(11) **EP 0 525 567 B1**
(45) Veröffentlichungstag und Bekanntmachung des Hinweises auf die Patenterteilung: **04.09.1996**
(21) Anmeldenummer: 92112354.3
(22) Anmeldetag: 20.07.1992
(51) Int. Cl.: C08G 18/08, C08G 18/48, C08G 18/44, D06M 15/564, C08G 18/76, C09D 175/00

(54) **Verwendung von Beschichtungsmitteln zur Erzeugung wasserdampfdurchlässiger Beschichtungen**
Use of coatings in the preparation of water vapour permeable coatings
Utilisation de revêtements pour la préparation de revêtements perméables à la vapeur d'eau

(30) Priorität: 01.08.1991 DE 4125454
(43) Veröffentlichungstag der Anmeldung: 03.02.1993
(73) Patentinhaber: BAYER AG, 51368 Leverkusen (DE)
(72) Erfinder: Pedain, Josef, Dr., W-5000 Köln 80 (DE); Schütze, Detlef-Ingo, Dr., W-5000 Köln 80 (DE); Thoma, Wilhelm, Dr., W-5090 Leverkusen 3 (DE); Nachtkamp, Klaus, Dr., W-4000 Düsseldorf 13 (DE)

(56) Entgegenhaltungen:
- EP-A- 0 004 927
- EP-A- 0 073 392
- EP-A- 0 313 951
- DE-A- 3 315 596
- DE-A- 3 505 098
- FR-A- 2 334 698
- FR-A- 2 370 761
- US-A- 4 895 894

## Beschreibung

Die Erfindung betrifft die Verwendung bestimmter Mittel zur Erzeugung kompakter wasserdampfdurchlässiger Beschichtungen, insbesondere auf flexiblen Substraten wie textilen Flächengebilden. Diese Mittel enthalten
Aa) Polyurethan mit hydrophilen Gruppen oder
Ab) Vorprodukt, das bei erhöhter Temperatur zur Bildung dieses Polyurethans
   a) befähigt ist und
      i) blockiertes NCO-Präpolymerisat und
      ii) Vernetzer enthält,
   und gegebenenfalls
B) organische Lösungsmittel.

Der Begriff "Polyurethane" im Sinne der Erfindung umfaßt auch Polyurethanharnstoffe.

Beschichtungen mit hoher Wasserdampfdurchlässigkeit sind in der Vergangenheit immer wieder das Ziel von Untersuchungen und Entwicklungen gewesen, da nur sie sich z.B. für die Herstellung hochwertiger Ledersubstitute oder für Bekleidungsstücke mit hohem Tragekomfort eignen.

Solche Beschichtungen lassen sich auf verschiedenen Wegen erzeugen, von denen die wichtigsten hier kurz skizziert seien. Seit geraumer Zeit ist ein Verfahren bekannt, das die Erzeugung von Mikroporen in einer Beschichtung auf physikalischem Wege ermöglicht; ein Polymeres (und hier wie im folgenden ist darunter hauptsächlich ein Polyurethan zu verstehen), das in einem Lösungsmittel gelöst ist, wird auf ein Substrat oder einen Trennträger schichtförmig aufgebracht und im nassen Zustand in ein Bad geführt, das einen Nichtlöser für das Polymere enthält, welcher allerdings mit dem Lösungsmittel mischbar ist. Der Nichtlöser dringt infolgedessen in die Lösungsschicht ein, wo er das Polymere allmählich ausfällt. Bei der Trocknung des so entstandenen verfestigten Films hinterlassen das entweichende Lösungsmittel wie auch der Nichtlöser Mikrokanäle, die in der Beschichtung für den Wasserdampftransport zur Verfügung stehen.

In ähnlicher Weise lassen sich nach Beimischung von Pulvern wasserlöslicher Salze zu Polymerlösungen Überzüge erzeugen, aus denen mit Wasser das Salz unter Hinterlassung von Mikrokavitationen ausgewaschen werden kann.

Auch die Perforation von kompakten Polymer-Folien mit Hilfe energiereicher Elektronenstrahlen führt zu laminierbaren Filmen mit hoher Wasserdampfdurchlässigkeit. Diese Methode ist jedoch apparativ sehr aufwendig.

Neuerdings wird eine Variante der Mikroporös-Beschichtung technisch durchgeführt, die ohne die komplizierte Tauchbadtechnologie auskommt, aber im wesentlichen zu gleichen Ergebnissen führt. Bei diesem Verfahren - auch als "Verdampfungskoagulation" bekannt - wird der Lösung des Polymeren in einem niedrig siedenden organischen Lösungsmittel soviel Wasser zugesetzt, daß die resultierende Streichpaste gerade noch stabil und applizierbar ist. Beim Abdunsten entweicht das organische Lösungsmittel zuerst; das sich immer mehr anreichernde Wasser fällt das Polymer wie beim Tauchverfahren aus und entweicht schließlich beim Trocknen unter Hinterlassen einer mikropörosen Struktur in der Folie.

Die Tauchbadverfahren haben ebenso wie die Verdampfungskoagulation den wesentlichen Nachteil, daß Mikrokanäle oder Mikrokavitationen eine Schwächung des wasserdampfdurchlässigen Überzuges bewirken. Das heißt, daß mechanische Zugfestigkeit und Abriebbeständigkeit gegenüber einem kompakten Film deutlich abfallen. Außerdem ist die Dichtigkeit gegenüber Wasser nicht immer so hoch, wie sie für manche Anwendungen (z.B. Regenbekleidung) gefordert werden muß.

Es hat daher nicht an Bemühungen gefehlt, Wasserdampfdurchlässigkeit in einem Überzug nicht nur durch Anwendung physikalischer Methoden, sondern auch auf chemischem Wege zu erzeugen. So ist beispielsweise bereits vorgeschlagen worden, solche Beschichtungen mit Polyurethanen zu erzeugen, die teilweise aus wasserlöslichen oder hydrophilen Aufbaukomponenten bestehen.

So werden in den DE-OS 12 20 384 und 12 26 071 Polyurethan-Beschichtungsmittel beschrieben, deren Polyurethane aus Glykolen, Diisocyanaten und Polyethylenglykolen mit Molekulargewichten um 1000 hergestellt worden sind.

Auch als Diolkomponente in Polyesterpolyolen für Polyurethanelastomere lassen sich Polyethylenglykole verwenden, um, wie aus der japanischen Patentanmeldung 61/009 423 bekannt, wasserdampfdurchlässige Beschichtungen mit geringer Wasserquellung zu erzeugen.

Ebenfalls wasserdampfdurchlässig sind kompakte Deckstriche auf Verbundstoffen aus textilen Substraten und mikroporösen Beschichtungen, wie sie in der DE-OS 2 020 153 beschrieben werden.

Segmentierte Polyurethanelastomere aus Polyethylenglykolen sind auch aus der EP-A 52 915 bekannt.

Auch andere organische hydrophile Komponenten sind Polyurethanen zugesetzt worden, um wasserdampfdurchlässige Beschichtungen und Verbundmaterialien herzustellen; insbesondere Poly-γ-methylglutamat kann Polyurethanen zugesetzt, in ihnen als Aufbaukomponente verwendet oder ihnen aufgepfropft werden. Aus der Vielzahl der diese Anwendung beschreibenden Literaturstellen seien die DE-OS 1 922 329 und 1 949 060 sowie die japanischen Patentanmeldungen 58/057 420 und 59/036 781 genannt.

Die DE-A 35 05 098 betrifft Beschichtungsmittel auf Basis wasserdispergierbarer Isocyanat-Präpolymerer, die Ethylenoxid-Polyethergruppen und ionische Gruppen enthalten können. Allerdings dienen diese Beschichtungsmittel zur Herstellung von Textilgürteln, die neben Haltbarkeit, Festigkeit, Dehnbarkeit und Klebfreiheit vor allem eine hohe Abrieffestigkeit besitzen sollen. Wasserdampfdurchlässigkeit wird nicht erwähnt.

Die EP-A 313 951 betrifft Mittel zur Herstellung wasserdampfdurchlässiger Beschichtungen auf Basis von Polyurethanen, die Ethylenoxid-Polyethergruppen enthalten. Ionische Gruppen als Polyurethanbestandteile werden nicht genannt.

Die FR-A 2 370 761 betrifft wasserdispergierbare Polyurethane, die Ethylenoxid-Polyethergruppen und ionische Gruppen enthalten. Die diese Polyurethane enthaltenden wäßrigen Dispersionen sind thermisch koagulierbar und deshalb - laut FR-A 2 370 761 - zur Herstellung wasserdampfdurchlässiger Folien geeignet. Bei der Koagulation entstehen jedoch mikroporöse Produkte.

Von besonderem technischen Interesse für das Gebiet der wasserdampfdurchlässigen kompakten Beschichtungen sind in jüngster Zeit hauptsächlich Polyurethane, die als Aufbaukomponenten die oben erwähnten Polyethylenglykole enthalten; diese Rohstoffe sind preisgünstig, allgemein verfügbar und technisch gut zugänglich. Auch die daraus erhältlichen Polyurethane und Polyurethanharnstoffe sind im Prinzip gut bekannt. Im Gegensatz zu den weit verbreiteten Polyurethanen und Polyurethanharnstoffen, die als höhermolekulare Diole Polyesterdiole, Polycarbonatdiole oder Polyetherdiole enthalten, sind diese wasseraufnahmefähig, permeabel für Wasserdampf, gelegentlich sogar in Wasser stark quellbar oder löslich. Deshalb werden den die Hydrophilie verursachenden Polyethylenglykolen hydrophobe Polyole beigemischt; aus diesen Gemischen lassen sich Polyurethane bzw. Polyurethanharnstoffe herstellen, die gute Wasserdampfdurchlässigkeit mit guter Resistenz gegen die Einflüsse flüssigen Wassers verbinden.

Da die Flächengebilde aus solchen Polyurethanen in natürlicher Umgebung immer einer mehr oder weniger hohen Luftfeuchtigkeit ausgesetzt sind und ihrer Natur wegen auch mehr Wasser speichern als gewöhnliche wasserdampfdichte Polymerfilme, müssen außerordentlich hohe Anforderungen an die Hydrolysebeständigkeit der eingesetzten Ausgangsmaterialien gestellt werden.

Hydrophile Einheiten höhermolekularer Polyethylenglykole innerhalb der Polyurethankette verbessern die Wasserdampfdurchlässigkeit der Beschichtungen. Die Quellbarkeit dieser Schichten in Wasser führt jedoch dazu, daß beim Auflegen diskreter Wassertropfen auf der Schicht pustelartige Quellerscheinungen auftreten. Diese sind für einen textilen oder ledernen Gebrauchsartikel nicht nur eine ästhetische Störung, sondern ein wesentlicher technischer Mangel. Die Ouellbarkeit der Beschichtungen führt dann weiterhin zu mangelnden Naßechtheiten, z.B. mangelnder Naßreibechtheit und mangelnder Waschbeständigkeit.

In der Praxis ist es notwendig, den Gehalt an Polyethylenglykol mit einem Molgewicht von 1000 und höher nicht zu hoch zu wählen, um die genannten nachteiligen Eigenschaften zu vermeiden, was dann mit einem Verzicht auf sehr hohe Wasserdampfdurchlässigkeit verbunden ist.

Der Einsatz von Polyethylenglykolen mit einem Molgewicht unterhalb von etwa 1000 wäre für den Erhalt von günstigen Eigenschaften vorzuziehen, führt aber bei Produkten vom Stand der Technik dazu, daß dann die Wasserdampfdurchlässigkeit der Beschichtung dramatisch geringer wird.

Überraschenderweise wurde gefunden, daß man äußerst wasserdampfdurchlässige Beschichtungen mit sehr geringer Wasserquellneigung herstellen kann, wenn man als Beschichtungsmittel Systeme aus
A) einem Polyurethansystem enthaltend entweder
   a) ein(en) Polyurethan(-harnstoff) mit einer Reißdehnung (nach DIN 53 504) von 200 bis 1 000 %, vorzugsweise 400 bis 700 %, auf Basis von Polyisocyanat, Polyhydroxylverbindungen, die pro Molekül 2 bis 8 Hydroxylgruppen aufweisen, mit als Zahlenmittel bestimmten Molekulargewichten von 350 bis 10 000, vorzugsweise 350 bis 5 000, insbesondere 800 bis 2 500, und Kettenverlängerungsmittel aus der Reihe der Polyhydroxylverbindungen und Polyamine mit Molekulargewichten von 32 bis 349, wobei das (der) Polyurethan(-harnstoff) a) ionische Gruppen in einer Menge von 0,1 bis 75, vorzugsweise 0,5 bis 40 meq pro 100 g Polyurethan(-harnstoff) a) und 2 bis 70, vorzugsweise 10 bis 145 Gew.-%, bezogen auf Polyurethan(-harnstoff) a), Polyethylenoxideinheiten (-CH₂CH₂O)ₙ-mit einer Sequenzlänge n von 3 bis 55, vorzugsweise 4 bis 25 enthält, oder
   b) ein bei erhöhter Temperatur reaktionsfähiges Vorprodukt aus
      (i) blockiertem NCO-Prepolymerisat und
      (ii) polyfunktioneller Verbindung, die mit den blockierten Isocyanatgruppen (nach deren Deblockierung) zu reagieren vermag - "Vernetzer" genannt,
      das zur Bildung des Polyurethan(-harnstoff)s a) befähigt ist, und gegebenenfalls
B) organischem Lösungsmittel in einer Menge bis zu 80 Gew.-%, bezogen auf die Summe A + B, zur Erzeugung kompakter wasserdampfdurchlässiger Beschichtungen, verwendet.

Der erfindungsgemäß erzielbare Effekt ist deshalb so überraschend, weil Polyurethane, die entweder die ionischen Gruppen alleine oder die Polyethylenoxideinheiten der anspruchsgemäß definierten Art alleine enthalten, eine praktisch verwertbare Wasserdampfdurchlässigkeit nicht besitzen.

Die Polyurethansysteme A) können auf an sich bekannte Weise in der Schmelze oder - vorzugsweise - in einem organischen Lösungsmittel hergestellt werden, und zwar sowohl nach dem sogenannten one-shot-Verfahren als auch über ein NCO-Präpolymerisat. Bei der letztgenannten Variante kann man auch die NCO-Gruppen des Präpolymerisats blockieren und dann erst nach dem Auftrag des Beschichtungsmittels auf das Substrat diese blockierten Isocyanatgruppen deblockieren und mit einem geeigneten Vernetzer, vorzugsweise einem Polyamin, umsetzen.

Für den Aufbau dieser Polyurethane A) einschließlich der erwähnten Präpolymerisate werden Polyisocyanate der Formel Q(NCO)₂ eingesetzt, wobei Q für einen aliphatischen Kohlenwasserstoffrest mit 4 bis 12 Kohlenstoffatomen, einen cycloaliphatischen Kohlenwasserstoffrest mit 6 bis 25 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger bevorzugt einzusetzender Diisocyanate sind Tetramethylendiisocyanat, Hexamethylendiisocyanat, Dodecamethylendiisocyanat, 1,4-Diisocyanato-cyclohexan, 3-Isocyanatomethyl-3,3,5-trimethylcyclohexylisocyanat (Isophorondiisocyanat), 4,4'-Diisocyanatodicyclohexylmethan, 4,4'-Diisocyanato-3,3'-dimethyl-dicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'-, 2,4'- oder 2,2'-Diisocyanatodiphenylmethan bzw. Gemische der Isomeren, 4,4'-Diisocyanatodiphenylpropan-(2,2), p-Xylylen-diisocyanat und α,α,α' ,α'-Tetramethyl-m- oder p-xylylen-diisocyanat sowie aus diesen Verbindungen bestehende Gemische.

Aromatische Polyisocyanate, wie sie eingehend in den US-Patentschriften 3 984 607 und 4 035 213, der DE-OS 2 402 840 bzw. der DE-AS 2 457 387 beschrieben sind, werden bevorzugt. Besonders bevorzugt sind 2,4'- bzw. 4,4'-Diisocyanato-diphenylmethan, die isomeren Toluylendiisocyanate sowie insbesondere Gemische dieser Diisocyanate. Besonders bevorzugte cycloaliphatische Diisocyanate sind Isophorondiisocyanat und 4,4'-Diisocyanatodicyclohexylmethan.

Es ist selbstverständlich auch möglich, die in der Polyurethan-Chemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate (mit)zuverwenden.

Für den Aufbau der Polyurethane a) geeignete Komponenten zur Einführung der Polyethylenoxideinheiten umfassen Homopolyethylenglykole und Hydroxylendgruppen aufweisende Ethylenoxid-Mischpolyether (vorzugsweise Ethylenoxid/Propylenoxid-Mischether) mit Block- oder statistischer Verteilung mit der Maßgabe, daß die Ethylenoxidsequenzen den anspruchsgemäßen Forderungen genügen, ferner Polycarbonate und Polyetherester auf Basis der obengenannten Homopolyethylenglykole, Ethylenoxid-Mischpolyether oder deren Mischungen mit anderen Polycarbonat- bzw. Polyester-bildenden Polyhydroxylverhindungen. Sofern als Komponenten zur Einführung der Polyethylenoxideinheiten in das Polyurethan a) oder dessen Vorprodukte Mischpolyether oder Polycarbonate bzw. Polyetherester auf Basis solcher Mischpolyester eingesetzt werden, so zählen als Polyethylenoxidsequenzen im Sinne der Patentansprüche lediglich die Einheiten, die die anspruchsgemäße Sequenzlänge aufweisen, während solche Polyethylenoxidsequenzen, die eine Sequenzlänge oberhalb oder unterhalb der anspruchsgemäßen Grenzen besitzen, außer Betracht bleiben.

Ausgangskomponenten für die Polyurethane a), die die Polyethylenoxideinheiten liefern, umfassen vor allem 2 oder 3 Hydroxylgruppen aufweisende Ethylenoxid-Polyether und Ethylenoxid/Propylenoxid-Mischpolyether mit einem überwiegenden Gewichtsanteil an Ethylenoxideinheiten. Reine Ethylenoxid-Polyether sind bevorzugt.

Der Begriff "mittlere Molekulargewichte" im Sinne der Erfindung bedeutet als Zahlenmittel bestimmte Molekulargewichte.

Die optimale Menge der Polyethylenoxid-Einheiten im Polyurethan a) hängt etwas von der Sequenzlänge ab und folgt der Regel, daß bei kurzer Sequenzlänge die Menge etwas höher sein muß und bei hoher Sequenzlänge die Menge etwas niedriger sein kann: Während bei einer Sequenzlänge von 3 der Gehalt des Polyurethans a) an diesen Polyethylenoxideinheiten bis zu 70 Gew.-% betragen kann, ist es empfehlenswert, bei einer Sequenzlänge über 20 den Gehalt des Polyurethans a) an diesen Polyethylenoxideinheiten auf 30 Gew.-% zu begrenzen. Möchte man Polyurethane a) mit Polyethylenoxideinheiten niedriger und hoher Sequenzlänge verwenden, so wird man einen Gehalt zwischen den beiden beschriebenen Extremen wählen: Will man beispielsweise Polyethylenoxideinheiten mit Sequenzlängen von 3 und 40 wählen, so sollte bei einem Gehalt der Einheiten mit einer Sequenzlänge 3 von 35 Gew.-% der Gehalt an Einheiten einer Sequenzlänge 40 den Wert von 20 Gew.-% möglichst nicht überschreiten.

Der Anteil der Polyethylenglykole in einem Molekulargewichtsbereich von 150 bis 2.500 bzw. der in Diolen eingebauten (CH₂-CH₂-O)ₙ-Reste, in denen n = 3 bis n = 22 sein kann, an der Gesamtmenge der Makrodiole kann 4 bis 100 Gew.-% betragen. Dies entspricht etwa einem Anteil am Polyurethan von etwa 2 bis 70 Gew.-%, vorzugsweise 10 bis 45 Gew.-% bei einer Sequenzlänge von 3 bis 55, vorzugweise 4 bis 25.

Als Reaktionspartner für die Polyisocyanate kommen Polyhydroxylverbindungen in Frage, die pro Molekül 2 bis 8, vorzugsweise 2 oder 3 Hydroxylgruppen aufweisen und ein (mittleres) Molekulargewicht von 350 bis zu 10 000, vorzugsweise bis zu 6000, aufweisen.

Niedermolekulare Polyhydroxylverbindungen mit einem Molekulargewicht von 32 bis 349 ("Kettenverlängerungsmittel") umfassen die verschidenartigsten Diole, wie beispielsweise
a) Alkandiole wie Ethylenglykol, Propandiol-1,2 und -1,3, Butandiol-1,4, Pentandiol-1,5, Dimethylpropandiol-1,3 und Hexandiol-1,6;
b) Etherdiole wie Diethylenglykol, Triethylenglykol oder 1,4-Phenylen-bis-(β-hydroxyethylether);
c) Esterdiole der allgemeinen Formeln

   HO-(CH₂)ₓ-CO-O-(CH₂)_{y}-OH

   und

   HO-(CH₂)ₓ-O-CO-R-CO-O-(CH₂)ₓ-OH

   in denen
   - R: einen Alkylen- bzw. Arylenrest mit 1 bis 10, vorzugsweise 2 bis 6, C-Atomen,
   - x =: 2 bis 6 und
   - y =: 3 bis 5 bedeuten,
   z.B. δ-Hydroxybutyl-ε-hydroxy-capronsäureester, ω-Hydroxyhexyl-γ-hydroxybuttersäureester, Adipinsäure-(β-hydroxyethyl)ester und Terephthalsäure-bis(β-hydroxyethyl)ester.

Als "Kettenverlängerungsmittel" können auch Polyamine mit einem Molekulargewicht von 32 bis 349, vorzugsweise aliphatische oder aromatische Diamine verwendet werden, beispielsweise Ethylendiamin, Propylendiamin-1,2 und -1,3, 1,4-Tetramethylendiamin, 1,6-Hexamethylendiamin, N,N'-Diisobutyl-1,6-hexamethylendiamin,
1,11-Undecamethylendiamin, Cyclohexan-1,3- und -1,4-diamin sowie deren Gemische,
1-Amino-3,3,5-trimethyl-5-aminomethylcyclohexan,
2,4- und 2,6-Hexahydrotoluylendiamin sowie deren Gemische,
Perhydro-2,4'- und -4,4'-diaminodiphenylmethan und dessen 3,3'-Dimethylderivat und Bis-(3-aminopropyl)methylamin;
p-Xylylendiamin, Bisanthranilsäureester gemäß den DE-OS 20 40 644 und 21 60 590, 3,5- und 2,4-Diaminobenzoesäureester gemäß DE-OS 20 25 900, die in den DE-OS 18 03 635, 20 40 650 und 21 60 589 beschriebenen estergruppenhaltigen Diamine, sowie 3,3'-Dichlor-4,4'-diamino-diphenylmethan,Toluylendiamin, 4,4'-Diaminodiphenylmethan und 4,4'-Diaminodiphenyldisulfid.

Als Diamine im Sinne der Erfindung sind auch Hydrazin, Hydrazinhydrat und substituierte Hydrazine zu betrachten, wie z.B.
Methylhydrazin, N,N'-Dimethylhydrazin und deren Homologe sowie Säuredihydrazide, z.B. Carbodihydrazid, Oxalsäuredihydrazid, die Dihydrazide von Malonsäure, Bernsteinsäure, Glutarsäure: Adipinsäure, β-Methyladipinsäure, Sebacinsäure, Hydracrylsäure und Terephthalsäure, Semicarbazido-alkylen-hydrazide, wie z.B. β-Semicarbazidopropionsäurehydrazid (DE-OS 17 70 591), Semicarbazidoalkylencarbazinester, wie z.B. 2-Semicarbazidoethylcarbazinester (DE-OS 19 18 504) oder auch Aminosemicarbazid-Verbindungen, wie z.B. β-Aminoethyl-semicarbazido-carbonat (DE-OS 19 02 931).

Höhermolekulare Polyhydroxylverbindungen umfassen die in der Polyurethanchemie an sich bekannten Hydroxypolyester, Hydroxypolyether, Hydroxypolythioether, Hydroxypolyacetale, Hydroxypolycarbonate und/oder Hydroxypolyesteramide, vorzugsweise solche mit mittleren Molekulargewichten von 600 bis 4000, besonders bevorzugt solche mit mittleren Molekulargewichten von 800 bis 2500. Polyetherpolyole und Polyesterpolyole sind besonders bevorzugt.

Besonders bevorzugt sind pro Molekül durchschnittlich 2 bis 3 Hydroxylgruppen aufweisende Propylenoxid-Polyether, die auch Polyethylenoxid-Einheiten enthalten können, sowie unterhalb von 60°C schmelzende Hydroxypolyester mit 2 oder 3 endständigen OH-Gruppen und einem mittleren Molekulargewicht von 1000 bis 6000.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele hierfür seien genannt:
Bernsteinsäure, Adipinsäure Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure; dimere und trimere Fettsäuren wie Ölsäure, gegebenenfalls in Mischung mit monomeren Fettsäuren, Terephthalsäuredimethylester, Terephthalsäure-bis-glykolester.

Als mehrwertige Alkohole kommen z.B. Ethylenglykol, Propandiol-(1,2) und (1,3), Butandiol-(1,4) und -(2,3), Hexandiol-(1,6), Octandiol-(1,8), Neopentylglykol, Cyclohexandimethanol (1,4-Bis-hydroxymethyl-cyclohexan), 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol, Dipropylenglykol, Dibutylenglykol und Polybutylenglykole in Frage.

Besonders bevorzugt sind auch Mischungen der obengenannten Polyetherpolyole mit Polyesterpolyolen mit mittleren Molekulargewichten von 1000 bis 3000 aus Adipinsäure, Hexandiol-1,6 und Neopentylglykol.

Bei der Herstellung der NCO-Präpolymerisate können gegebenenfalls auch niedermolekulare Polyole mit einem Molekulargewicht von weniger als etwa 300 mitverwendet werden, wie sie als Kettenverlängerungsmittel an sich bekannt sind. Bevorzugt sind in diesem Zusammenhang Butandiol-1,4 und Trimethylolpropan.

Die Herstellung der NCO-Präpolymerisate kann in an sich bekannter Weise erfolgen, indem man die genannten Polyhydroxylverbindungen mit überschüssigem Diisocyanat, vorzugsweise bei ca. 70 bis 100°C umsetzt. Man wählt hierbei im allgemeinen ein NCO/OH-Verhältnis von 1,5:1 bis 6,0:1, vorzugsweise von 1,7:1 bis 2,5:1.

Als Blockierungsmittel für die NCO-Präpolymerisate kommen z.B. Ketoxime aus Hydroxylamin und Ketonen wie Aceton, Methylethylketon, Diethylketon, Cyclohexanon, Acetophenon und Benzophenon in Frage. Bevorzugtes Blockierungsmittel ist Methylethylketonoxim (= Butanonoxim).

Aber auch andere Blockierungsmittel, wie sie z.B. in "Methoden der Organischen Chemie", (Houben-Weyl), Bd. 14/2, 4.Aufl., Georg Thieme Verlag, Stuttgart 1963, S. 61 ff., beschrieben werden, sind prinzipiell geeignet.

Die Blockierungsreaktion kann in der Weise durchgeführt werden, daß man das NCO-Präpolymerisat mit äquivalenten Mengen an Ketoxim bei erhöhter Temperatur, z.B. bei 70 bis 100°C, bis zum Verschwinden der NCO-Gruppen umsetzt.

Solche blockierten NCO-Präpolymerisate sind beispielsweise in der DE-OS 29 02 090 beschrieben.

Die blockierten Präpolymerisate können zwecks Einstellung einer optimalen Viskosität mit organischen Lösungsmitteln gemischt werden. Infolge der Blockierung der NCO-Gruppen müssen hierbei nicht unbedingt gegenüber freien NCO-Gruppen inerte Lösungsmittel eingesetzt werden. Beispielsweise können Alkohole wie Isopropanol, Ether wie Ethylenglykolmonomethyl- und -monoethylether, Ester wie Essigsäureethyl- und -butylester sowie die Essigsäureester von Ethylenglykolmonomethyl- und -monoethylether, Ketone wie Methylethylketon, Cyclohexanon, und Amide wie N,N-Dimethylformamid: N,N-Dimethylacetamid, N-Methylpyrrolidon verwendet werden.

Als Vernetzerkomponente für die blockierten NCO-Präpolymerisate können im Prinzip alle polyfunktionellen Verbindungen, die mit den blockierten Isocyanatgruppen (nach deren Deblockierung) zu reagieren vermögen, im Prinzip also vor allem Polyamine, vorzugsweise Diamine, wie die oben als Kettenverlängerungsmittel beschriebenen Diamine, verwendet werden. Geeignet ist u.a. auch Isophorondiamin. Vorzugsweise wird 4,4'-Diamino-3,3'-dimethyl-dicyclohexylmethan, ein bei Raumtemperatur flüssiges, aliphatisches Diamin mit sehr geringem Dampfdruck, verwendet.

Die Vermischung der blockierten NCO-Präpolymerisate mit dem Vernetzer erfolgt im allgemeinen etwa im Verhältnis der Äquivalentgewichte dieser Komponenten, obwohl für einige Anwendungszwecke auch eine Untervernetzung zweckmäßig ist, so daß das Äquivalentverhältnis von blockiertem NCO zu vernetzender Gruppe - vorzugsweise also zu NH₂ - im allgemeinen zwischen 1,35:1 und 0,95:1, bevorzugt 1,25:1 bis 1:1, liegt.

Gemeinsam ist den Untergruppen der Komponente A die Fähigkeit zur Filmbildung zueigen.

Es empfiehlt sich, die Komponente A in einem organischen Lösungsmittel zu lösen, sofern sie nicht sowieso schon in einem solchen Lösungsmittel hergestellt worden sind. Diese Lösungen können zwischen 10 und 98, vorzugsweise zwischen 20 und 50 Gew.-% Festkörpergehalt besitzen. Hohe Festkörpergehalte sind vor allem bei Einsatz von Präpolymerisaten möglich. Geeignete Lösungsmittel umfassen Aromaten wie Toluol, Xylole und die oben für die blockierten Präpolymerisate aufgezählten Lösungsmittel.

Ionische Gruppen für die Polyurethane a) umfassen die Alkali- und Ammoniumcarboxylat- und -sulfonatgruppen sowie Ammoniumgruppen. Geeignete Einbaukomponenten für das Einbringen dieser Gruppen in die Polyurethane a) umfassen demzufolge z.B. Dihydroxycarbonsäuren, Diaminocarbonsäuren sowie Diaminoalkylsulfonsäuren und ihre Salze wie z.B. Dimethylolpropionsäure, Ethylendiamin-β-ethyl-sulfonsäure, Ethylendiamin-propyl- oder -butylsulfonsäure, 1,2- oder 1,3-Propylendiamin-β-ethylsulfonsäure, Lysin, 3,5-Diaminobenzoesäure und deren Alkali- und/oder Ammoniumsalze: das Addukt von Natriumbisulfit an Buten-2-diol-1,4.

Zu den bevorzugten Einbaukomponenten für das Einbringen der ionischen Gruppen in die Polyurethane a) gehören insbesondere die Sulfonatgruppen aufweisenden aliphatischen Diole gemäß DE-OS 2 446 440 der Formel 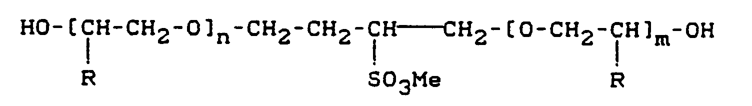 worin
- R: Wasserstoff oder einen organischen Rest mit 1 bis 8 Kohlenstoffatomen,
- m und n: Zahlen von 1 bis 10 und
- Me: ein Ammonium oder das Kation eines Alkalimetalls bedeuten sowie
das propoxylierte Anlagerungsprodukt von Natriumbisulfit an Butendiol-1,4, ferner die kationischen oder auch anionischen, einbaufähigen inneren Emulgatoren gemäß DE-OS 2 651 506 oder Diaminosulfonate der Formel NH₂-(CH₂)₂₋₆-NH-(CH₂)₂₋₃-SO₃^{⊖} Kation^{⊕} oder Diaminocarboxylate der Formel H₂N-(CH₂)₂₋₆-NH-(CH₂)₂₋₃-COO^{⊖} Kation^{⊕}.

Ganz generell können als Einbaukomponenten für das Einbringen der ionischen Gruppen in die Polyurethane a) kationische und/oder anionische hydrophile difunktionelle Aufbaukomponenten der für die Herstellung von wäßrigen Polyurethandispersionen beschriebenen Art verwendet werden, wie beispielsweise ionische Gruppen (z.B. tert.-Aminogruppen, die in Ammoniumgruppen übergehen, wenn sie angesäuert oder alkyliert werden) aufweisende Dihydroxylverbindungen, -diamine oder -diisocyanate.

Ferner ist es auch möglich, die Polyurethane a) durch Umsetzung der blockierten NCO-Präpolymerisate (i) mit Vernetzern (ii) aufzubauen, die durch kationische und/oder anionische Gruppen modifiziert sind.

Als weitere Aufbaukomponenten zur Herstellung der Polyurethane a) kommen insbesondere Kettenverlängerer mit Molekulargewichten von 60 bis 299, die 1-4 Hydroxyl-oder Aminogruppen aufweisen, in Betracht.

Kettenverlängerer mit Hydroxylgruppen sind Diole wie z.B. Ethandiol, Butandiol-1,4 und -1,3, Hexandiol-1,6 und Hydrochinondihydroxyethylether. Polyole wie z.B. Trimethylolpropan können als verzweigende Komponente mitverwendet werden.

Jedoch können als Kettenverlängerer auch Diamine verwendet werden. Hierbei handelt es sich vorzugsweise um aliphatische oder cycloaliphatische Diamine, obwohl gegebenenfalls auch tri- oder höherfunktionelle Polyamine zur Erzielung eines gewissen Verzweigungsgrades mitverwendet werden können. Beispiele geeigneter aliphatischer Polyamine sind Ethylendiamin, Trimethylendiamin, Tetramethylendiamin, Hexamethylendiamin, Propylendiamin-1,2, das Isomerengemisch von 2,2,4- und 2,4,4-Trimethylhexamethylendiamin und Bis-(ß-aminoethyl)-amin (Diethylentriamin).

Beispiele geeigneter cycloaliphatischer Polyamine sind:

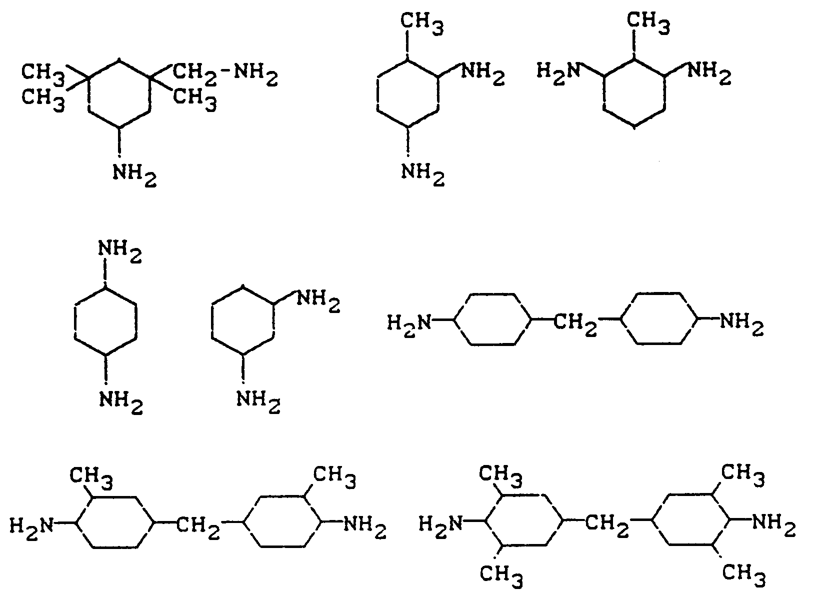

Auch araliphatische Polyamine, wie z.B. 1,3- und 1,4-Xylylendiamin oder α,α,α',α'-Tetramethyl-1,3- und -1,4-xylylendiamin lassen sich als Kettenverlängerungsmittel für die Herstellung der Polyurethane a) einsetzen.

Zur Modifizierung bestimmter Eigenschaften der erfindungsgemäß herstellbaren Beschichtungen, wie Griff, Oberflächenglätte, können oligomere Polysiloxan-Segmente enthaltende Verbindungen mit mindestens zwei gegenüber Isocyanaten reaktionsfähigen Gruppen mit Molekulargewichten von 300 bis 6000, vorzugsweise von 500 bis 1500, eingesetzt werden. Bevorzugt werden difunktionelle Polysiloxane mit organofunktionellen Endgruppen eingesetzt. Diese Verbindungen weisen Struktureinheiten der Formel -O-Si-(R)₂- auf, wobei R für einen C₁-C₄-Alkyl- oder einen Phenylrest, vorzugsweise für einen Methylrest steht. Die Mengen solcher oder anderer Hilfsmittel überschreiten in der Regel 20 Gew.-%, vorzugsweise 10 Gew.-%, bezogen auf A, nicht.

Die Polyurethane a) können beispielsweise in Losung hergestellt werden (DE-OS 37 36 652).

Grundsätzlich ist es auch möglich, die Polyurethane a) in an sich bekannter Weise mit Hilfe von geeigneten Mischaggregaten, wie z.B. Reaktionsschnecken, in der Schmelze herzustellen und die nach Abkühlung, z.B. in Form von Granulaten, erhaltenen Feststoffe zur Herstellung der erfindungsgemäßen Beschichtungsmittel in Lösungsmitteln zu lösen.

Als Lösungsmittel B) kommen stark polare flüchtige organische Verbindungen in Frage, wie etwa Dimethylformamid, Diethylacetamid, Dimethylsulfoxid und N-Methylpyrrolidon. Auch Mischungen aus diesen stark polaren und aus schwach polaren Lösungsmitteln wie aromatischen Kohlenwasserstoffen, Estern und Ketonen können verwendet werden. Bevorzugt werden Mischungen aus schwach polaren Lösungsmitteln, meist aus Alkoholen und Estern, Ketonen oder aromatischen Kohlenwasserstoffen. Dies sind beispielsweise Toluol, Xylol, Ethylbenzol, höher alkylierte Aromaten, die unter dem Begriff Solventnaphtha bekannt sind, Essigester, Ethylenglykolmonomethyl- und -monoethyletheracetat, Propylenglykolmonomethyl-und -monoethyletheracetat, Butylacetat, Ethanol, Isopropanol, n-Butanol, i-Butanol, die Isomeren des Amylalkohols, Cyclohexanol, Diacetonalkohol, Aceton, Methylethylketon, Methylisobutylketon.

Bevorzugte Mischungen sind solche aus Aromaten und Alkoholen, besonders bevorzugt solche aus Toluol und den Isomeren des Butanols.

Die Menge des Lösungsmittels B) hängt wesentlich davon ab, ob man das Polyurethan a) als solches oder das entsprechende Vorprodukt b) enthaltend blockiertes NCO-Präpolymerisat (i) und Vernetzer (ii) einsetzt: Bei Verwendung von Polyurethanen a) wird der Lösungsmittelgehalt 80 Gew.-% nicht über- und 40 Gew.-% nicht unterschritten, während der Lösungsmittelgehalt bei Verwendung der Vorprodukte b) im allgemeinen 0 bis 20 Gew.-% beträgt.

Die erfindungsgemäß zu verwendenden Beschichtungsmittel enthalten weniger als 5 Gew.-% Wasser, bezogen auf die Summe A + B.

Die Viskosität der erfindungsgemäß zu verwendenden Beschichtungsmittel beträgt im allgemeinen 10.000 bis 120.000, vorzugsweise 20.000 bis 90.000 mPa.s, gemessen bei 25°C.

Die erfindungsgemäß zu verwendenden Beschichtungsmittel werden in der Regel ohne weitere Zusätze auf ein flexibles, vorzugsweise textiles Substrat aufgebracht. Dies kann durch direktes Streichen auf das Substrat mit Hilfe von Rakelmessern, Walzen oder Drahtrakeln erfolgen. In der Regel werden mehrere Striche hintereinander, bevorzugt jedoch zwei, aufgebracht, so daß die Gesamtdicke der Beschichtung aus Grund- und Deckstrich(en) 10-100 m, bevorzugt 20-60 m, beträgt. Als Grundstrich kann auch eine zu einer mikroporösen Schicht auftrocknende Paste verwendet werden, wie es in DE-OS 2 020 153 beschrieben ist. Der anschließend aufgebrachte Deckstrich schützt den gesamten Verbund gegen mechanische Beanspruchung und Abrieb.

Das Aufbringen des Beschichtungsverbundes aus Grund- und Deckstrich ist aber auch nach dem sogenannten Umkehrverfahren möglich. Hierbei wird zunächst der Deckstrich auf einen Trennträger aufgetragen und getrocknet. Nach dem Auftragen eines zweiten Grund- oder Haftstriches wird das textile Substrat in die noch feuchte Schicht leicht eingedrückt. Nach dem Trocknen entsteht ein fester Verbund aus Beschichtung und Substrat, der vom Trennträger gelöst wird und in seinem Aufbau weitgehend dem der vorher beschriebenen Direktbeschichtung entspricht.

Die außerordentlich wasserdampfdurchlässigen und tropfenfesten Beschichtungen können auch aus Lösungen hergestellt werden, die mit Pigmenten und/oder Farbstoffen versehen sind. Darüber hinaus können Hydrophobierungsmittel wie Fluorcarbonharze, Wachse und Öle zugesetzt werden, soweit dies die Wasserdampfdurchlässigkeit nicht übermäßig verschlechtert. Ferner ist der Zusatz von vernetzenden Additiven möglich, die eine Reaktion mit sich selbst oder dem Polyurethan erst in der fertigen Beschichtung, in der Regel durch Hitzeeinwirkung, eingehen. Zu diesen Verbindungen gehören (teilweise) veretherte Melaminformaldehydharze, z.B. Hexamethylolmelamin und gegebenenfalls blockierte Polyisocyanate mit 3 und mehr Isocyanatgruppen, z.B. Tris[isocyanatohexyl]isocyanurat und Tris[isocyanatohexyl]biuret.

Bevorzugte Substrate umfassen Textilien, Leder, Papier etc.

Die Prozentangaben der nachfolgenden Beispiele beziehen sich, sofern nicht anders angegeben, auf das Gewicht; Teile sind Gewichtsteile.

### Beispiele

Die Reißdehnung wurde nach DIN 53 504, Ausgabe August 1975, gemessen mit der Änderung, daß die verwendeten Probekörper mit Ausnahme der Dicke die Abmessungen des Normstabs S 2 hatten; die Dicke betrug 0,1 mm (Gießfolie).

### Beispiel 1

a) Herstellung des Polyurethans
   Folgende Makrodiole werden eingesetzt:
   Ein Polycarbonatdiol aus Hexandiol-1,6 mit einem mittleren Molgewicht 2000, Hydroxylzahl 56 (Diol I) und ein Polyetherpolyol, ebenfalls mit der Hydroxylzahl 56. Dieser Polyether wird so hergestellt, daß durch Starten auf 1,2-Propandiol zunächst mit Propylenoxid ein Oligopropylenoxid hergestellt wird, dann ein Mischblock aus Ethylenoxid und Propylenoxid erzeugt wird und dann an den Molekülenden durch Umsetzung mit Ethylenoxid Endgruppen aus etwa 3 Ethylenoxideinheiten entstehen. Das molare Verhältnis Ethylenoxid/Propylenoxid im gesamten Aufbau beträgt 1:1 (Diol II).
   Außerdem findet ein Sulfonatgruppen enthaltendes Diol Verwendung, das man durch Umsetzung von NaHSO₃ mit Butendiol-1,4 und anschließende Propoxylierung bis zu einem Molekulargewicht von etwa 425 erhält (Diol III).
   Das Polyurethan erhält man durch Umsetzung folgender Bestandteile bei 60 bis 80°C;
   0,5 Mol Diol I
   0,5 Mol Diol II
   0,6 Mol Diol III
   2,4 Mol Butandiol-1,4
   ca. 4 Mol Diphenylmethandiisocyanat-1,4 (MDI) Das Polyurethan ist in DMF/Toluol 2:1 (Gewichtsteile) gelöst. Die 30 %ige Lösung hat eine Viskosität von 27 000 mPa.s. Der Gehalt an SO₃^{⊖} im Polyurethan beträgt ca. 1,73 mVal in 100 g. Der Gehalt an (CH₂-CH₂O)₃ (eingeführt als Endgruppen im Diol II, berechnet) beträgt ca. 3,8 Gew.-%.
b) Bestimmung der Wasserdampfdurchlässigkeit*
   Ein aus dieser Lösung gegossener freitragender Film von 53 µm Dicke besitzt eine Wasserdampfdurchlässigkeit* von 7400 g/m² · d. Im Vergleich dazu ergibt ein aus einer Lösung, deren Polyurethan statt des propoxylierten Adduktes aus Butendiol-1,4 und NaHSO₃ nur die entsprechende molare Menge Butandiol-1,4 enthält, also frei von ionischen Gruppen ist, hergestellter freitragender Film von 48 µm Dicke eine Wasserdampfdurchlässigkeit von 290 g/m² · d.
c) Bruchdehnung: 560 % (Dicke 0,1 mm).

* Die Wasserdampfdurchlässigkeiten werden nach den Maßgaben gemessen, wie sie in der Druckschrift DS 2109 TM1 der British Textile Technology Group, Manchester, England niedergelegt sind.

### Beispiel 2

a) Herstellung der Polyurethanlösung:
   Die wasserfreie Diolkomponenten-Mischung bestehend aus 86,5 g eines aus Tetraethylenglykol und Hexandiol-1,6 (1:1 molar) und Diphenylcarbonat hergestellten Polycarbonats (OH-Zahl: 56; MG: ca. 2000), 86,5 g eines auf Ethylenglykol gestarteten Mischethers aus Ethylenoxid und Propylenoxid (1:1 molar) (OH-Zahl: 56; MG: ca. 2000, Diol II aus Beispiel 1), 22 g eines propoxylierten Addukts aus Butendiol-1,4 und NaHSO₃ (MG: 425, Diol III aus Beispiel 1) und 18,7 g Butandiol-1,4 werden in 233 g Toluol und 467 g Dimethylformamid gelöst.
   Anschließend werden bei 60 bis 80°C 86,5 g 4,4'-Diisocyanatodiphenylmethan (MDI) zugesetzt. Die Lösung wird so lange gerührt, bis IR-spektroskopisch kein Isocyanat mehr nachweisbar ist. Nun werden 0,5 g-Portionen MDI so oft nach und nach zugegeben und bis zum Verschwinden freier NCO-Gruppen verrührt, bis die Viskosität der 30 %igen Lösung etwa 10 000 mPa.s beträgt.
   Ein aus dieser Lösung gegossener freitragender Film von 47 µm Dicke besitzt eine Wasserdampfdurchlässigkeit von 15 400 g/m² d. Im Vergleich dazu ergibt ein aus einer Lösung, deren Polyurethan statt des propoxylierten Adduktes aus Butendiol-1,4 und NaHSO₃ nur die entsprechende molare Menge Butandiol-1,4 enthält, also frei von ionischen Gruppen ist, hergestellter freitragender Film von 42 µm Dicke eine Wasserdampfdurchlässigkeit von 1270 g/m² · d. Die Bruchdehnung einer Folie mit einer Dicke von 0,1 mm beträgt 620 %.
   Als weiterer Vergleich wird ein Polyurethan hergestellt, das zwar ionische Gruppen aber keine Ethylenoxid-Einheiten enthält. Man ersetzt dazu im obigen Ansatz das Tetraethylenglykol enthaltende Polycarbonat und den Polyether Diol II durch die entsprechende molare Menge Diol I. Alle übrigen Bestandteile bleiben erhalten wie angegeben. Ein gegossener, freitragender Film dieses Polyurethans von 56 µm Dicke hat eine Wasserdampfdurchlässigkeit von nur 160 g/m² · d.
b) Herstellung eines Beschichtungsartikels im Transferverfahren:
   Auf ein handelsübliches mattes Trennpapier wird die Lösung nach a) gerakelt, Rakelspalt <0,08 mm, Trocknung bei 80°C bis 150°C.
   Auf diesen Deckstrich rakelt man eine Haftstrichpaste, Spalte <0,1 mm, aus 1000 g der in DE-A 3 736 652, Beispiel 3 beschriebenen 50 %igen Haftstrichlösung, der man zur Vernetzung 40 g eines Vernetzers auf Basis eines Hexamethoxy/butoxy-melaminharzes, 70 %ig in i-Butanol und 10 g einer 20 %igen Lösung von p-Toluolsulfonsäure in i-Propanol als Katalysator zusetzt. Ein Baumwollgewebe von 160 g/m² wird zukaschiert. Die Vernetzung des Haftstrichs erfolgt bei 140°C. Die gesamte Beschichtungsauflage beträgt ca. 60 g/m² Feststoff.

Der weiche, wasserdampfdurchlässige Artikel hat folgende Echtheiten:

| | |
|---|---|
| Wasserdampfdurchlässigkeit: | 9800 g/m² · d |
| Wassersäule: | 2000 mm |
| 3 x Wäsche: | 2000 mm |
| 3 x chem. Reinigung: | 2000 mm |

Bei der Einwirkung von Wassertropfen auf die Beschichtungsoberseite, 1-5 Minuten, beobachtet man keine pustelartigen Veränderungen der Oberfläche.

Demgegenüber beträgt die Wasserdampfdurchlässigkeit des entsprechenden Artikels mit dem angeführten sulfonatgruppenfreien Vergleichsprodukt 1800 g/m² · d bei 64 g/m² Feststoffauflage. Stellt man wie oben angegeben einen entsprechenden Artikel her aus dem Ethylenoxidgruppenfreien Polyurethan, das nur ionische Gruppen enthält, erhält man bei ebenfalls 64 g/m² Feststoffauflage eine Wasserdampfdurchlässigkeit von nur 390 g/m² · d.

### Beispiel 3

a) Nach der Verfahrensweise des Beispiels 2a) wird eine Polyurethan-Lösung aus folgenden Komponenten hergestellt:
   - 89 g: eines aus Tetraethylenglykol und Diphenylcarbonat hergestellten Polycarbonatdiols (OH-Zahl: ca. 56: MG: ca. 2000)
   - 89 g: des auf Ethylenglykol gestarteten Mischpolyethers aus Ethylenoxid/Propylenoxid (1:1 molar) (OH-Zahl: 56: MG: 2000): Diol II aus Beispiel 1
   - 11,3 g: des propoxylierten Addukts aus Butendiol-1,4 und NaHSO₃ (MG: 425); Diol III aus Beispiel 1
   - 21,7 g: Butandiol-1,4
   - ca. 89 g: 4,4'-Diisocyanatodiphenylmethan
   - 467 g: Dimethylformamid
   und
   - 233 g: Toluol

   Ein aus dieser Lösung erzeugter freitragender Film von 48 µm Dicke weist eine Wasserdampfdurchlässigkeit von 8300 g/m² · d auf. Die Bruchdehnung einer Folie mit einer Dicke von 0,1 mm beträgt 690 %.
   Demgegenüber besitzt das entsprechende sulfonatgruppenfreie Vergleichsprodukt als freitragender Film von 44 µm Dicke nur eine Wasserdampfdurchlässigkeit von 900 g/m² · d.
b) Ein analog Beispiel 2b) hergestellter Beschichtungsartikel im Transferverfahren mit einer Beschichtungsauflage von 75 g/m² Feststoff führt zu einem weichen, wasserdampfdurchlässigen Artikel mit einer Wasserdampfdurchlässigkeit von 7600 g/m² · d, der ebenfalls bei der Einwirkung von Wassertropfen keine pustelartigen Veränderung der Oberfläche zeigt und gute Gebrauchsechtheiten besitzt.
   Demgegenüber ergibt der entsprechende Artikel mit dem sulfonatgruppenfreien Vergleichsprodukt bei einer Artikelauflage von 65 g/m² eine Wasserdampfdurchlässigkeit von 1250 g/m² · d.

### Beispiel 4

a) Nach der Verfahrensweise des Beispiels 2a) wird eine Polyurethan-Lösung aus folgenden Komponenten hergestellt:
   - 87,7 g: eines aus Triethylenglykol und Diphenylcarbonat hergestellten Polycarbonats (OH-Zahl: ca. 56; MG: ca. 2000)
   - 87,7 g: des auf Ethylenglykol gestarteten Mischpolyethers aus Ethylenoxid/Propylenoxid (1:1 molar) (OH-Zahl: 56; MG: 2000), Diol II aus Beispiel 1
   - 16,8 g: des propoxylierten Addukts aus Butendiol-1,4 und NaHSO₃ (MG: 425); Diol III aus Beispiel 1
   - 20,1 g: Butandiol-1,4
   - ca. 88 g: 4,4'-Diisocyanatodiphenylmethan
   - 233 g: Toluol
   - 467 g: Dimethylformamid

   Ein aus dieser Lösung erzeugter freitragender Film von 45 µm Dicke weist eine Wasserdampfdurchlässigkeit von 5300 g/m² · d auf. Die Bruchdehnung einer Folie mit einer Dicke von 0,1 mm beträgt 660 %.
   Das entsprechende sulfonatgruppenfreie Vergleichsprodukt als freitragender Film von 49 µm Dicke besitzt eine Wasserdampfdurchlässigkeit von 250 g/m² · d.
b) Der analog zu Beispiel 2b) hergestellte Beschichtungsartikel im Transferverfahren führt bei einer Beschichtungsauflage von 78 g/m² zu einem weichen, wasserdampfdurchlässigen Artikel mit einer Wasserdampfdurchlässigkeit von 4200 g/m² · d und guten Gebrauchsechtheiten. Bei der Einwirkung von Wassertropfen tritt wiederum keine pustelartige Veränderung der Oberfläche auf.
   Der analoge Vergleichsartikel ohne Sulfonsäuregruppen ergibt bei einer Artikelauflage von 68 g/m² eine Wasserdampfdurchlässigkeit von 440 g/m² · d.

### Beispiel 5

a) Analog zu der Verfahrensweise des Beispiels 2a) wird eine Polyurethan-Lösung aus folgenden Komponenten hergestellt:
   - 45,4 g: eines aus Hexandiol-1,6 und Diphenylcarbonat hergestellten Polycarbonats (OH-Zahl: ca, 56; MG: ca. 2000), Diol I aus Beispiel 1
   - 105 g: Octaethylenglykol (MG: ca. 370)
   - 28,9 g: des propoxylierten Addukts aus Butendiol-1,4 und NaHSO₃ (MG: 425); Diol III aus Beispiel 1
   - 7,2 g: Butandiol-1,4
   - 113,5 g: 4,4'-Diisocyanatodiphenylmethan
   - 467 g: Dimethylformamid
   - 233 g: Toluol

   Ein aus dieser Lösung erzeugter freitragender Film von 48 µm Dicke besitzt eine Wasserdampfdurchlässigkeit von 12300 g/m² · d. Die Bruchdehnung einer Folie mit einer Dicke von 0,1 mm beträgt 460 %,
   Das entsprechende sulfonatgruppenfreie Vergleichsprodukt als freitragender Film von 45 µm Dicke weist dagegen nur eine Wasserdampfdurchlässigkeit von 340 g/m² · d auf.
b) Wird analog zu Beispiel 2b) ein Beschichtungsartikel im Transferverfahren hergestellt, so erhält man bei einer Artikelauflage von 76 g/m² für diesen Artikel eine Wasserdampfdurchlässigkeit von 7350 g/m² · d.
   Der Artikel zeigt ebenfalls für der Einwirkung eines Wassertropfens keine pustelartige Veränderung der Oberfläche.
   Der analoge Vergleichsartikel ohne Sulfonatgruppen im Polyurethan ergibt bei einer Artikelauflage von 60 g/m² eine Wasserdampfdurchlässigkeit von nur 900 g/m² · d.

### Beispiel 6

a) Herstellung der Polyurethanharnstoff-Lösung
201,9 g Polycarbonat, hergestellt aus Tetraethylenglykol/Hexandiol-1,6 (1:1 molar) und Diphenylcarbonat (OH-Zahl: 56; MG: ca. 2000) und 22,4 g eines auf Ethylenglykol gestarteten Mischpolyethers aus Ethylenoxid/ Propylenoxid (1:1 molar) (OH-Zahl: 56: MG: ca. 2000, Diol II aus Beispiel 1) werden bei ca. 50°C mit 39,9 g 3-Isocyanatomethyl-3,5,5-trimethyl-cyclohexylisocyanat (IPDI) und 15,1 g Hexamethylendiisocyanat (HDI) verrührt, auf 100°C aufgeheizt und bei dieser Temperatur nachgerührt, bis der theoretische NCO-Wert leicht unterschritten ist. Das Prepolymer wird auf 20°C abgekühlt und mit 315 g Toluol, 107 g Isopropanol und 70 g Methoxypropanol verdünnt. Die folgende Weiterverarbeitung muß möglichst schnell durchgeführt werden. Bei 25°C bis max. 30°C wird eine Lösung von 8,6 g 3-Amino-methyl-3,5,5-trimethylcyclohexylamin (IPDA), 2,5 g Hydrazinhydrat und 10,5 g Ethylendiaminethylsulfonsaures Natrium in 180 g Isopropanol/28 g Wasser zugetropft und eine Viskosität von 30 000 bis 40 000 mPa.s eingestellt. Ein aus dieser Lösung gegossener freitragender Film von 48 µm Dicke besitzt eine Wasserdampfdurchlässigkeit von 15900 g/m² · d. Die Bruchdehnung einer Folie mit einer Dicke von 0,1 mm beträgt 730 %.
Im Vergleich dazu ergibt ein aus einer Lösung, deren Polyurethanharnstoff statt des Ethylendiamin-ethylsulfonsauren-Natriums die entsprechende molare Menge Hydrazin und IPDA (1:1) enthält, hergestellter freitragender Film von 42 µm nur eine Wasserdampfdurchlässigkeit von 1630 g/m² · d.
b)
Ein analog zu Beispiel 2b) hergestellter Beschichtungsartikel im Transferverfahren mit einer Beschichtungsauflage von 78 g/m² führt zu einem weichen, wasserdampfdurchlässigen Artikel mit folgenden Echtheiten:

| | |
|---|---|
| Wasserdampfdurchlässigkeit: | 9700 g/m² · d |
| Wassersäule: | |
| Original | 2000 mm |
| 3 x Wäsche | 2000 mm |
| 3 x chem. Reinigung | 2000 mm |
| Bally-Flexometer | |
| Raumtemperatur | 150000 Knickungen |
| -10°C | 30000 Knickungen |

### Tropfentest:

Bei der Einwirkung von Wassertropfen auf die Beschichtungsoberseite, 1-5 Minuten, beobachtet man keine pustelartige Veränderung der Oberfläche.

Demgegenüber beträgt die Wasserdampfdurchlässigkeit des entsprechenden Artikels mit dem sulfonatgruppenfreien Vergleichsprodukt nur 1900 g/m² · d bei einer Auflage von 78 g/m².

### Beispiel 7

a) Herstellung der Polyurethan-Lösung:
   51,9 g 2,4-/2,6-Toluylendiisocyanat-Isomerengemisch (65:35 Gew.-Teile) werden bei Raumtemperatur mit 213 g eines aus Tetraethylenglykol und Hexandiol-1,6 (1:1 molar) und Diphenylcarbonat hergestellten Polycarbonats (OH-Zahl: 56; MG: ca. 2000), 213 g eines auf Ethylenglykol gestarteten Mischethers aus Ethylenoxid und Propylenoxid (1:1) (OH-Zahl: 56; MG: ca. 2000) Diol II aus Beispiel 1, 3,9 g Butandiol-1,4 und 18,2 g eines propoxylierten Addukts aus Butendiol-1,4 und NaHSO₃ (MG: 425) Diol III aus Beispiel 1 verrührt. Man heizt innerhalb von 30 Minuten auf 80°C auf. Nach etwa 1 bis 2 Stunden wird nach Bedarf portionsweise mit insgesamt 350 g Toluol und 150 g Methylethylketon verdünnt. Die Lösung wird weiterhin gerührt, bis eine Viskosität von 20000 bis 35000 mPa.s bei 23°C erreicht ist. Sollte vor Erreichen der gewünschten Viskosität das Isocyanat verbraucht sein (keine NCO-Bande im IR), wird in 1 g-Schritten Isocyanat nachgegeben. Überschüssiges Isocyanat wird durch Zugabe von Butanonoxim blockiert. Ein aus dieser Lösung gegossener freitragender mit Harz vernetzer Film von 45 µm Dicke besitzt eine Wasserdampfdurchlässigkeit von 17800 g/m² · d. Die Bruchdehnung einer Folie mit einer Dicke von 0,1 mm beträgt 500 %. Im Vergleich dazu ergibt ein aus einer Lösung, deren Polyurethan statt des propoxylierten Adduktes aus Butendiol-1,4 und NaHSO₃ nur die entsprechende Menge Hexandiol-1,6 enthält, also frei von ionischen Gruppen ist, hergestellter freitragender, mit Harz vernetzter Film von 43 µm Dicke eine Wasserdampfdurchlässigkeit von 8900 g/m² · d.
b) Herstellung eines Beschichtungsartikels im Transferverfahren:
   Auf ein handelsübliches Trennpapier wird die Lösung nach Beispiel 2a) gerakelt, Rakelspalt <0,08 mm, Trocknung bei 80°C bis 150°C. Auf diesen Deckstrich rakelt man die Haftstrichpaste, Spalt <0,1 mm, aus 1000 g der nach a) beschriebenen 50 %igen Haftstrichlösung, der man zur Vernetzung 40 g eines Vernetzers auf Basis eines Hexamethoxy/butoxy-melaminharzes, 70 %ig in 1-Butanol und 10 g einer 20 %igen Lösung von p-Toluolsulfonsäure in i-Propanol als Katalysator zusetzt. Ein Baumwollgewebe von 160 g/m² wird zukaschiert. Die Vernetzung des Haftstrichs erfolgt bei 140°C. Die gesamte Beschichtungsauflage beträgt ca. 60 g/m² Feststoff.
   Der weiche, wasserdampfdurchlässige Artikel besitzt eine Wasserdampfdurchlässigkeit von 9400 g/m² · d neben weiteren guten Gebrauchsechtheiten.
   Bei der Einwirkung von Wassertropfen auf die Beschichtungsoberseite, 1-5 Minuten, beobachtet man keine pustelartige Veränderung der Oberfläche.
   Demgegenüber beträgt die Wasserdampfdurchlässigkeit des entsprechenden Artikels mit den in Beispiel 2 und unter 7a) angeführten sulfonatgruppenfreien Vergleichsprodukten 1400 g · m² · d.
c) Herstellung eines Beschichtungsartikels im Direktverfahren:
   Ein Polyamidgewebe von ca. 100 g/m² Warengewicht wird mit der unter b) beschriebenen Streichpaste grundiert, Trocken- und Vernetzungstemperatur 90°C/120°C/150°C, Trockenauflage 15 g/m². Ein zweiter Strich bzw. Schlußstrich wird mit der in Beispiel 6a) beschriebenen Lösung eines 1-Komponenten-Aliphaten-Polyurethanharnstoffs erzeugt. Trocknungstemperatur 90°C/120°C, Gesamtauflage (trocken) 22 g/m². Die Wasserdampfdurchlässigkeit beträgt 6900 g/m²·d.
   Bei der Einwirkung von Wassertropfen auf die Beschichtungsoberseite, 1-5 min, beobachtet man keine pustelartige Veränderung.
   Demgegenüber beträgt die Wasserdampfdurchlässigkeit des entsprechenden Artikels mit den in Beispiel 7a) und 6a) angeführten sulfonatgruppenfreien Vergleichsprodukten 700 g/m²·d.

### Beispiel 8

### Wasserdampfdurchlässiges High-Solid-Polyurethan Herstellung des butanonoxim-blockierten Prepolymeren:

200 g eines Polyethers auf Basis von Trimethylolpropan und Propylenoxid mit einem Molekulargewicht von 6000, 1000 g eines linearen Polyethers auf Basis von Propylenglykol und Propylenoxid mit einem Molekulargewicht von 1000, 1700 g eines linearen Polycarbonats aus Tetraethylenglykol mit einem Molekulargewicht von 2000, sowie 106 g eines propoxylierten Additionsproduktes von NaHSO₃ an Butendiol-1,4 vom Molekulargewicht 425, Diol III aus Beispiel 1 werden mit 1125 g 4,4'-Diisocyanato-diphenylmethan und 174 g 2,4-Diisocyanato-toluol ca. 3 Stunden lang bei 80-90°C umgesetzt, bis der berechnete NCO-Gehalt von 4,05 Gew.-% knapp unterschritten ist. Anschließend werden bei 60-70°C 496 g Butanonoxim sowie 733 g Propylenglykolmonomethyletheracetat rasch eingerührt. Nach 20 Minuten ist IR-spektroskopisch kein NCO mehr nachweisbar. Das blockierte NCO-Vorpolymerisat, eine Flüssigkeit mit einer Viskosität von ca. 40 000 mPa.s bei 20°C, hat einen bestimmbaren, latenten NCO-Gehalt von 3,1 Gew.-%.

### Herstellung der Folie:

400 g des butanonoxim-blockierten Prepolymeren werden mit 35 g 4,4'-Diamino-3,3'-dimethyl-dicyclohexyl-methan verrührt. Mittels Walzenrakel erzeugt man einen Film, der bei 90°C vorgetrocknet wird und bei 140 bis 160°C der Vernetzungsreaktion unter Abspaltung von Butanonoxim unterworfen wird.

Der freitragende, elastische Film hat ein Gewicht von 60 g/m². Die Wasserdampfdurchlässigkeit beträgt 5300 g/m²·d. Die Bruchdehnung einer Folie mit einer Dicke von 0,1 mm beträgt 400 %.

Ein vergleichbarer nach der DE-PS 29 02 090 aus dem dort beschriebenen Vorpolymerisat B hergestellter Film, der kein Tetraethylenglykol und kein propoxyliertes Diolsulfonat enthält, weist bei gleicher Filmstärke eine Wasserdampfdurchlässigkeit von nur 600 g/m² · d auf.

### Beispiel 9

a) Herstellung des Polyurethans
60,5 g des Polycarbonatdiols aus Hexandiol-1,6 mit einem mittleren Molekulargewicht 2000, Hydroxylzahl 56 (Diol I), 8,6 g eines Polyethylenoxids, ebenfalls mit der Hydroxylzahl 56 und Molekulargewicht 2000, 103,7 g des Polyethers (Diol II) aus Ethylenoxid/Propylenoxid (1:1 molar) mit der Hydroxylzahl 56, 18,7 g Butandiol-1,4, 22 g des propoxylierten Umsetzungsproduktes von NaHSO₃ mit Butendiol-1,4 (Diol III) werden in 233 g Toluol und 467 g Dimethylformamid gelöst.
Anschließend werden bei 60 bis 80°C 86,5 g 4,4'-Diisocyanatodiphenylmethan (MDI) zugesetzt. Die Lösung wird so lange gerührt, bis IR-spektroskopisch kein Isocyanat mehr nachweisbar ist. Nun werden gegebenenfalls 0,5 g-Portionen MDI so oft nach und nach zugegeben und bis zum Verschwinden freier NCO-Gruppen verrührt, bis die Viskosität der 30 %igen Lösung etwa 20 000 mPa.s beträgt.
Ein aus dieser Lösung gegossener freitragender Film von 45 µm Dicke besitzt eine Wasserdampfdurchlässigkeit von 14 800 g/m² · d. Die Bruchdehnung einer Folie mit einer Dicke von 0,1 mm beträgt 700 %. Im Vergleich dazu ergibt ein aus einer Lösung, deren Polyurethan statt des Diols III nur die entsprechende molare Menge Butandiol-1,4 enthält, also frei von ionischen Gruppen ist, hergestellter freitragender Film von 42 µm Dicke eine Wasserdampfdurchlässigkeit von 1300 g/m² · d.
b) Herstellung eines Beschichtungsartikels im Transferverfahren
Auf ein handelsübliches mattes Trennpapier wird die Lösung nach a) gerakelt, Rakelspalt <0,08 mm, Trocknung bei 80°C bis 150°C. Auf diesen Deckstrich rakelt man die Haftstrichpaste analog Beispiel 2b). Ein Baumwollgewebe von 160 g/m² wird zukaschiert. Die Vernetzung des Haftstrichs erfolgt bei 140°C. Die gesamte Beschichtungsauflage beträgt ca. 60 g/m² Feststoff.
Der weiche, wasserdampfdurchlässige Artikel hat folgende Echtheiten:

| | |
|---|---|
| Wasserdampfdurchlässigkeit: | 9900 g/m² · d |
| Wassersäule: | 2000 mm |
| 3 x Wäsche: | 2000 mm |
| 3 x chem. Reinigung: | 2000 mm |
| Bally-Flexometer | |
| Raumtemperatur: | 150000 Knickungen |
| -10°C: | 30000 Knickungen |

Bei der Einwirkung von Wassertropfen auf die Beschichtungsoberseite, 1-5 Minuten, beobachtet man keine pustelartigen Veränderungen der Oberfläche.
Demgegenüber beträgt die Wasserdampfdurchlässigkeit des entsprechenden Artikels mit dem angeführten sulfonatgruppenfreien Vergleichsprodukt 2900 g/m² · d.
c)
Wird das Polyurethan nach a) in der Schmelze mit Hilfe einer Reaktionsschnecke hergestellt und anschließend 30 %ig in Toluol/DMF (1:2 Gewichtsteile) gelöst, dann besitzt ein aus dieser Lösung gegossener freitragender Film von 44 µm Dicke eine Wasserdampfdurchlässigkeit von 14 300 g/m² · d.

### Beispiel 10

a) Herstellung des Polyurethans
Man verfährt analog Beispiel 9a), setzt jedoch statt des Polycarbonatdiols aus Hexandiol-1,6 (Diol I) 60,5 g des Polycarbonatdiols aus Tetraethylenglykol/Hexandiol-1,6 (1:1 molar) mit dem mittleren Molekulargewicht 2000 und der Hydroxylzahl 56 ein.
Ein aus dieser 30 %igen Lösung gegossener freitragender Film von 52 µm Dicke besitzt eine Wasserdampfdurchlässigkeit von 15 900 g/m² · d. Die Bruchdehnung einer Folie mit einer Dicke von 0,1 mm beträgt 590 %.
b) Herstellung eines Beschichtungsartikels im Transferverfahren:
Wird mit der Deckstrichlösung a) ein Beschichtungsartikel analog Beispiel 9b) mit einer Beschichtungsauflage von ca. 60 g/m² Feststoff hergestellt, so erhält man einen weichen, wasserdampfdurchlässigen Artikel mit folgenden Echtheiten:

| | |
|---|---|
| Wasserdampfdurchlässigkeit: | 10500 g/m² · d |
| Wassersäule: | 2000 mm |
| 3 x Wäsche: | 2000 mm |
| 3 x chem. Reinigung: | 2000 mm |
| Bally-Flexometer | |
| Raumtemperatur: | 150000 Knickungen |
| -10°C: | 30000 Knickungen |

Der Artikel ist ebenfalls tropfenfest.

### Beispiel 11

a) Herstellung der Polyurethanharnstoff-Lösung
   112,9 g eines Adipinsäure-Polyesters aus Hexandiol-1,6 und Neopentylglykol (2:1 molar) vom Molekulargewicht 2000 mit der Hydroxylzahl 56, 60,5 g eines Polyethylenoxids, ebenfalls mit der Hydroxylzahl 56 und einem Molekulargewicht von 2000, 8,5 g eines Silikons mit 6 % OH-Gruppen vom Molekulargewicht ca. 600 werden bei ca. 50°C mit 76,1 g 3-Isocyanatomethyl-3,5,5-trimethylcyclohexylisocyanat (IPDI) verrührt, auf 100°C aufgeheizt und bei dieser Temperatur nachgerührt, bis der theoretische NCO-Wert leicht unterschritten ist.
   Das Prepolymer wird auf 20°C abgekühlt und mit 404 g Toluol und 108 g Isopropanol verdünnt. Die folgende Weiterverarbeitung muß möglichst schnell durchgeführt werden. Bei 25°C bis max. 30°C wird eine Lösung von 32,5 g 3-Aminomethyl-3,5,5-trimethyl-cyclohexylamin (IPDA) und 9,5 g Ethylendiamin-ethylsulfonsaures-Natrium in 150 g Isopropanol/38 g Wasser zugetropft und eine Viskosität von 10000 bis 15000 mPa.s eingestellt.
   Ein aus dieser 30 %igen Lösung gegossener freitragender Film von 43 µm Dicke besitzt eine Wasserdampfdurchlässigkeit von 15200 g/m² · d. Die Bruchdehnung einer Folie mit einer Dicke von 0,1 mm beträgt 490 %.
   Im Vergleich dazu ergibt ein aus einer Lösung, deren Polyurethanharnstoff statt des Ethylendiamin-ethylsulfonsauren-Natriums die entsprechende molare Menge IPDA enthält, hergestellter Film von 44 µm nur eine Wasserdampfdurchlässigkeit von 1600 g/m² · d.
b) Herstellung eines Beschichtungsartikels im Transferverfahren:
   Wird mit der Deckstrich-Lösung a) ein Beschichtungsartikel analog Beispiel 9b) mit einer Beschichtungsauflage von ca. 60 g/m² Feststoff hergestellt, so erhält man einen wasserdampfdurchlässigen Artikel mit einer Wasserdampfdurchlässigkeit von 9500 g/m² · d.
   Bei der Einwirkung von Wassertropfen auf die Beschichtungsoberseite, 1-5 Minuten, beobachtet man keine pustelartige Veränderung der Oberfläche.

### Beispiel 12

### Herstellung der Polyurethanharnstoff-Lösung

Man verfährt analog zu Beispiel 6a), ersetzt jedoch das Ethylendiamin-ethylsulfonsaure-Natrium durch 8,5 g Ethylendiamin-ethylcarbonsaures-Natrium. Die 30 %ige Lösung wird ebenfalls auf eine Viskosität von 30 000 bis 40 000 mPa.s eingestellt.

Ein aus dieser Lösung gegossener freitragender Film von 45 µm Dicke besitzt eine Wasserdampfdurchlässigkeit von 16600 g/m² · d. Die Bruchdehnung einer Folie mit einer Dicke von 0,1 mm beträgt 640 %. Im Vergleich dazu ergibt ein aus einer Lösung, deren Polyurethanharnstoff statt des Ethylendiamin-ethylcarbonsauren-Natriums die entsprechende molare Menge Hydrazin und IPDA (1:1) enthält, hergestellter freitragender Film von 42 µm nur eine Wasserdampfdurchlässigkeit von 1630 g/m² · d.

## Patentansprüche

1. Verwendung von Mitteln aus
A) einem Polyurethansystem enthaltend entweder
a) einen Polyurethan(-harnstoff) mit einer Reißdehnung (nach DIN 53 504) von 200 bis 1000 % auf Basis von Polyisocyanat, Polyhydroxylverbindungen, die pro Molekül 2 bis 8 Hydroxylgruppen aufweisen, mit als Zahlenmittel bestimmten Molekulargewichten von 350 bis 10 000 und Kettenverlängerungsmittel aus der Reihe der Polyhydroxylverbindungen und Polyamine mit Molekulargewichten von 32 bis 349, wobei das (der) Polyurethan(-harnstoff) a) ionische Gruppen in einer Menge von 0,1 bis 75 meq pro 100 g Polyurethan(-harnstoff) a) und 2 bis 70 Gew.-%, bezogen auf Polyurethan(-harnstoff) a), Polyethylenoxideinheiten (-CH₂CH₂O)ₙ- mit einer Sequenzlänge n von 3 bis 55 enthält, oder
b) ein bei erhöhter Temperatur reaktionsfähiges Vorprodukt aus
(i) blockiertem NCO-Präpolymerisat und
(ii) polyfunktioneller Verbindung, die mit den blockierten Isocyanatgruppen (nach deren Deblockierung) zu reagieren vermag - "Vernetzer" genannt,
das zur Bildung des Polyurethan(-harnstoff)s a) befähigt ist, und gegebenenfalls
B) organischem Lösungsmittel in einer Menge bis zu 80 Gew.-%, bezogen auf die Summe A + B, zur Erzeugung kompakter wasserdampfdurchlässiger Beschichtungen.

2. Verwendung nach Anspruch 1, wobei das (der) Polyurethan(-harnstoff) a) eine Reißdehnung von 400 bis 700 % besitzt.

3. Verwendung nach Anspruch 1, wobei das (der) Polyuretha(-harnstoff) a) ein Polyurethan(-harnstoff) auf Basis von Polyisocyanat, Diol mit mittleren Molekulargewichten von 800 bis 2500 und Kettenverlängerungsmitteln ist.

4. Verwendung nach Anspruch 1, wobei das (der) Polyurethan(-harnstoff) a) 0,5 bis 40 meq ionische Gruppen pro 100 g Polyurethan(-harnstoff) besitzt.

5. Verwendung nach Anspruch 1, wobei das (der) Polyurethan(-harnstoff) a) 10 bis 45 Gew.-% Polyethylenoxideinheiten (-CH₂CH₂O)ₙ- enthält.

6. Verwendung nach Anspruch 1, wobei die Sequenzlänge n 4 bis 25 beträgt.

7. Verwendung nach Ansprüchen 1 bis 6 zur Erzeugung wasserdampfdurchlässiger Beschichtungen auf Textilien, Leder oder Papier.

## Claims

1. Use of compositions composed of
A) a polyurethane system comprising either
a) a polyurethane(urea) having an elongation at break (according to DIN 53 504) of from 200 to 1000 % based on polyisocyanate, polyhydroxy compounds containing from 2 to 8 hydroxyl groups per molecule, having number-average molecular weights of from 350 to 10,000, and chain extenders from the series of the polyhydroxy compounds and polyamines having molecular weights of from 32 to 349, where the polyurethane(urea) a) contains ionic groups in a quantity of from 0.1 to 75 meq per 100 g of polyurethane(urea) a) and from 2 to 70 % by weight, based on polyurethane(urea) a), of polyethylene oxide units (-CH₂CH₂O)ₙ- having a sequence length n of from 3 to 55, or
b) a precursor which is reactive at elevated temperature and comprises
(i) blocked NCO prepolymer and
(ii) a polyfunctional compound capable of reaction with the blocked isocyanate groups (after their deblocking) - referred to as "crosslinking agent",
which is capable of forming the polyurethane(urea) a), and, if desired,
B) organic solvent in a quantity of up to 80 % by weight, based on the sum A + B, for the production of compact, water vapour-permeable coatings.

2. Use according to Claim 1, wherein the polyurethane(urea) a) has an elongation at break of from 400 to 700 %.

3. Use according to Claim 1, wherein the polyurethane(urea) a) is based on polyisocyanate, diol with average molecular weights of from 800 to 2500 and chain extenders.

4. Use according to Claim 1, wherein the polyurethane(urea) a) has from 0.5 to 40 meq of ionic groups per 100 g of polyurethane(urea).

5. Use according to Claim 1, wherein the polyurethane(urea) a) contains from 10 to 45 % by weight of polyethylene oxide units (-CH₂CH₂O)ₙ-.

6. Use according to Claim 1, wherein the sequence length n is from 4 to 25.

7. Use according to Claims 1 to 6 for the production of water vapour-permeable coatings on textiles, leather or paper.

## Revendications

1. Utilisation de produits consistant en :
A) une composition de polyuréthannes contenant soit
a) un polyuréthanne ou une polyuréthanne-ureé ayant un allongement à la rupture (selon DIN 53 504) de 200 à 1 000 %, à base d'un polyisocyanate, de composés polyhydroxylés contenant 2 à 8 groupes hydroxy par molécule, avec un poids moléculaire moyen, moyenne en nombre, de 350 à 10 000, et d'agents d'allongement des chaînes de la classe des composés polyhydroxylés et des polyamines de poids moléculaires 32 à 349, le polyuréthanne ou la polyuréthanne-urée a) contenant des groupes ioniques en quantités de 0,1 à 75 meq. pour 100 g du polyuréthanne ou de la polyuréthanne-urée a), et 2 à 70 % en poids, par rapport au polyuréthanne ou à la polyuréthanne-urée a), de motifs d'oxyde de polyéthylène (-CH₂CH₂O)ₙ- à une longueur de séquence n de 3 à 55,
soit
b) un produit précurseur réactif à température élevée consistant en
(i) un prépolymère à groupes NCO bloqués et
(ii) un composé polyfonctionnel capable de réagir avec les groupes isocyanates bloqués (après le déblocage), et appelé "agent réticulant",
qui est capable de former le polyuréthanne ou la polyuréthanne-urée a), et le cas échéant
B) des solvants organiques en quantité allant jusqu'à 80 % du poids total de A+B, pour la formation de revêtements compacts perméables à la vapeur d'eau.

2. Utilisation selon la revendication 1, dans laquelle le polyuréthanne ou la polyuréthanne-urée a) a un allongement à la rupture de 400 à 700 %.

3. Utilisation selon la revendication 1 dans laquelle le polyuréthanne ou la polyuréthanne-urée a) est à base d'un polyisocyanate, d'un diol de poids moléculaire moyen 800 à 2 100 et d'agents d'allongement des chaînes.

4. Utilisation selon la revendication 1 dans laquelle le polyuréthanne ou la polyuréthanne-urée a) contient 0,5 à 40 meq. de groupes ioniques pour 100 g.

5. Utilisation selon la revendication 1 dans laquelle le polyuréthanne ou la polyuréthanne-urée a) contient 10 à 45 % en poids de motifs d'oxyde de polyéthylène (-CH₂CH₂O)ₙ-.

6. Utilisation selon la revendication 1 dans laquelle la longueur de séquence n est de 4 à 25.

7. Utilisation selon les revendications 1 à 6 pour la formation de revêtements perméables à la vapeur d'eau sur des textiles, du cuir ou du papier.
